# EUROPEAN PATENT APPLICATION

(11) **EP 4 357 109 A1**
(43) Date of publication of application: **24.04.2024**
(21) Application number: 22824696.3
(22) Date of filing: 28.04.2022
(51) Int. Cl.: B29C 64/129, B33Y 70/00, B33Y 80/00, C08F 290/06

(54) **RESIN COMPOSITION FOR 3D PRINTER, METHOD FOR PRODUCING SAME, AND CURED PRODUCT**

(30) Priority: 17.06.2021 JP 2021101002
(71) Applicant: AGC Inc., Chiyoda-ku Tokyo 100-8405 (JP)
(72) Inventor: NAKAMURA, Makito, Tokyo 100-8405 (JP); SUZUKI, Chitoshi, Tokyo 100-8405 (JP); MISHRA, Nikhil, Tokyo 100-8405 (JP)
(74) Representative: Müller-Boré & Partner Patentanwälte PartG mbB
(86) International application number: PCT/JP2022/019223
(87) International publication number: WO 2022/264701

(57) **Abstract**

Provided are a resin composition for 3D printer which is low in viscosity, is good in handleability by 3D printers and can give shaped products excellent in flexibility in a broad temperature range, and a method for producing the same, and a cured product of the resin composition. The resin composition for 3D printer of the present invention contains a first monomer, a second monomer, and a photopolymerization initiator, wherein the first monomer is a reaction product of a particular polyether polyol, a polyisocyanate and a particular compound having a (meth)acryloyl group; the total number of moles of the hydroxyl group of the polyether polyol and a group reactive with isocyanate group of the compound having a (meth)acryloyl group is equal to the number of moles of the isocyanate group of the polyisocyanate; and the second monomer is a (meth)acrylic compound.

## Description

### Technical Field

The present invention relates to a resin composition for 3D printer, a method for producing the same, and a cured product of the resin composition.

### Background Art

As a stereoscopic shaping technology of resins, stereolithography of curing photocurable resins by using 3D printers based on three-dimensional CAD data are known. Stereolithography has such an advantage that even shaped products having complex shapes can be produced simply in a relatively short time.

With regard to photocurable resin compositions to be used as materials for stereolithography, for example, PTL 1 describes that a photocurable composition containing a urethane (meth)acrylate oligomer gives a cured product excellent in flexibility.

### Citation List

### Patent Literature

PTL1: JP 2000-351827 A

### Summary of Invention

### Technical Problem

In 3D printers, a photocurable resin composition of materials for stereolithography is subjected to additive manufacturing, and therefore it is desirable that the photocurable resin composition has a relatively low viscosity suitable for additive manufacturing.

The photocurable composition described in PTL 1 cannot altogether be said to have a viscosity low enough for use in 3D printers. Further, as shaped products by 3D printers, cured products are desired which are excellent in flexibility even in a low temperature range lower than room temperature, for example, 0°C or less.

The present invention solves the above problem, and an object is to provide a resin composition for 3D printer which is low in viscosity, is good in handleability by 3D printers and can give shaped products excellent in flexibility in a broad temperature range, and a method for producing the same, and a cured product of the resin composition.

### Solution to Problem

The present invention is based on a finding that a resin composition comprising a particular urethane (meth)acrylate and a (meth)acrylic compound as monomers and comprising a photopolymerization initiator has a viscosity low enough for use in 3D printers, and a cured product of the resin composition is excellent in flexibility even in a low temperature range.

The present invention provides the following means.
[1] A resin composition for 3D printer, comprising: a first monomer; a second monomer; and a photopolymerization initiator, wherein the first monomer is a reaction product of a polyether polyol, a polyisocyanate, and a compound having a (meth)acryloyl group; the polyether polyol has a molecular weight calculated from hydroxyl value of 3,100 to 40,000; the compound having a (meth)acryloyl group has one group reactive with isocyanate group in one molecule thereof, and one or two (meth)acryloyl groups in one molecule thereof; the total number of moles of the hydroxyl group of the polyether polyol and the group reactive with isocyanate group of the compound having a (meth)acryloyl group is equal to the number of moles of the isocyanate group of the polyisocyanate; and the second monomer is a (meth)acrylic compound.
[2] The resin composition for 3D printer according to [1], wherein the polyether polyol has a degree of unsaturation of 0.1 meq/g or less.
[3] The resin composition for 3D printer according to [1] or [2], wherein in all monomers to be constitutional units of the polyether polyol, ethylene oxide is 50% by mass or less.
[4] The resin composition for 3D printer according to any one of [1] to [3], wherein the polyether polyol has 3 or more hydroxyl groups in one molecule thereof.
[5] The resin composition for 3D printer according to any one of [1] to [4], wherein the second monomer has a (meth)acryloyl group and a hydrocarbon group having 1 to 10 carbon atoms.
[6] The resin composition for 3D printer according to any one of [1] to [5], wherein the first monomer is 10 to 80 parts by mass with respect to 100 parts by mass in total of the first monomer and the second monomer.
[7] The resin composition for 3D printer according to any one of [1] to [6], further comprising a third monomer, wherein the third monomer is a reaction product of a polyether polyol, a polyisocyanate, and a compound having a (meth)acryloyl group; the polyether polyol has a molecular weight calculated from hydroxyl value of less than 3,100; the compound having a (meth)acryloyl group has one group reactive with isocyanate group in one molecule thereof, and one or two (meth)acryloyl groups in one molecule thereof; and the total number of moles of the hydroxyl group of the polyether polyol and the group reactive with isocyanate group of the compound having a (meth)acryloyl group is equal to the number of moles of the isocyanate group of the polyisocyanate.
[8] The resin composition for 3D printer according to any one of [1] to [7], further comprising a polyether polyol wherein the polyether polyol has a molecular weight calculated from hydroxyl value of 3,100 to 40,000 and contains 50% by mass or less of ethylene oxide in all monomers to be constitutional units of the polyether polyol.
[9] A method for producing the resin composition for 3D printer according to any one of [1] to [8], comprising mixing blending components comprising the first monomer, the second monomer and the photopolymerization initiator, wherein the polyether polyol in the first monomer is a polyether polyol having a molecular weight calculated from hydroxyl value of 3,100 to 30,000, obtained by ring-opening polymerization of a monoepoxide by using a compound having an active hydrogen-containing group and having two or more active hydrogen atoms in one molecule thereof as an initiator in the presence of a double metal cyanide complex catalyst.
[10] A cured product obtained by irradiating the resin composition for 3D printer according to any one of [1] to [8] with light.
[11] The cured product according to [10], wherein the ratio of the storage elastic modulus thereof at -20°C to the storage elastic modulus thereof at 40°C is 30 or less.
[12] The cured product according to [10] or [11], wherein the cured product has a glass transition temperature of -50°C or less.
[13] The cured product according to any one of [10] to [12], wherein the cured product has an elongation at break of 170% or more.
[14] The cured product according to any one of [10] to [13], wherein the cured product is an artificial organ or an organ model.

### Advantageous Effects of Invention

The resin composition for 3D printer of the present invention is low in viscosity and good in the handleability in 3D printers, and can give shaped products excellent in flexibility in a broad temperature range.

### Description of Embodiments

Definitions and meanings of terms and representations in the present description are described below.

"(Meth)acryloyl group" is the generic term of acryloyl group and methacryloyl group; and similarly, "(meth)acrylic" is the generic term of acrylic and methacrylic, and "(meth)acrylate" is the generic term of acrylate and methacrylate.

The hydroxyl value of a polyether polyol is determined by a measurement according to JIS K1557-1:2007.

The molecular weight calculated from hydroxyl value of a polyether polyol is a value calculated from the formula of 56,100 × (the number of hydroxyl groups in one molecule of the polyether polyol)/(hydroxyl value).

The degree of unsaturation of a polyether polyol is measured according to JIS K1557-3:2007.

"The numbers of moles are equal" or "equimolar" means that the molar ratio of reacting functional groups is substantially 1. When the molar ratio is 0.7 to 1.4, preferably 0.8 to 1.3, the reacting functional groups are regarded as being equimolar.

The number-average molecular weight is a molecular weight in terms of polystyrene measured by gel permeation chromatography (GPC) based on a calibration curve fabricated by using standard polystyrene samples.

The glass transition temperature of a polyether polyol is a value measured by a differential scanning calorimeter.

The storage elastic modulus of a cured product of a resin composition is a value measured by a dynamic mechanical analyzer, specifically, according to the method in the Examples.

### [Resin composition for 3D printer]

The resin composition for 3D printer of the present invention contains a first monomer, a second monomer, and a photopolymerization initiator. The first monomer is a reaction product of a polyether polyol, a polyisocyanate, and a compound having a (meth)acryloyl group; the polyether polyol has a molecular weight calculated from hydroxyl value of 3,100 to 40,000; the compound having a (meth)acryloyl group has one group reactive with isocyanate group in one molecule thereof, and one or two (meth)acryloyl groups in one molecule thereof; and the total number of moles of the hydroxyl group of the polyether polyol and the group reactive with isocyanate group of the compound having a (meth)acryloyl group is equal to the number of moles of the isocyanate group of the polyisocyanate. The second monomer is a (meth)acrylic compound.

Such a resin composition has a viscosity low enough for use in 3D printers, and a cured product thereof is excellent in flexibility even in a low temperature range.

In the resin composition for 3D printer of the present invention, from the viewpoint of the stereolithography, the viscosity at 25°C is preferably 100 to 30,000 mPa·s, more preferably 200 to 26,000 mPa·s and still more preferably 300 to 23,000 mPa·s.

### [First monomer]

The first monomer is a reaction product of a polyether polyol, a polyisocyanate, and a compound having a (meth)acryloyl group. The reaction product is a urethane (meth)acrylate made by reacting the hydroxyl group of the polyether polyol and the group reactive with isocyanate group of the compound having a (meth)acryloyl group equimolarly with the isocyanate group of the polyisocyanate. The first monomer may be used singly in one kind or may be used concurrently in two or more kinds.

### <Polyether polyol>

The polyether polyol in the first monomer is preferably a compound obtained by ring-opening polymerization of a monoepoxide by using a compound having an active hydrogen-containing group and having two or more active hydrogen atoms in one molecule thereof as an initiator in the presence of a catalyst.

Examples of the active hydrogen-containing group of the initiator include a hydroxyl group, a carboxyl group and an amino group; and preferable is a hydroxyl group and more preferable is an alcoholic hydroxyl group.

Examples of the initiator include water, polyhydric alcohols, polyhydric phenols, polyvalent carboxyl groups and primary amines; preferable are water and polyhydric aliphatic alcohols, and more preferable are dihydric or trihydric aliphatic alcohols. A polyoxyalkylenepolyol having a lower molecular weight than the polyether polyol may be used as an initiator. The initiator may be used singly in one kind or may be used concurrently in two or more kinds.

The number of carbon atoms of the polyhydric aliphatic alcohol of the initiator is preferably 2 to 10, more preferably 2 to 8 and still more preferably 2 to 6.

Examples of the dihydric aliphatic alcohols among the polyhydric aliphatic alcohols include ethylene glycol, propylene glycol, 1,4-butanediol, 1,5-pentanediol, 3-methyl-1,5-pentanediol, neopentyl glycol, 1,6-hexanediol, diethylene glycol, dipropylene glycol, triethylene glycol, tripropylene glycol, polypropylene glycol and polyoxypropylene glycol. Then, examples of the tri- or higher-hydric aliphatic alcohols include glycerol, trimethylol ethane, trimethylolpropane, pentaerythritol, sorbitol, 1,2,6-hexanetriol, diglycerol, dipentaerythritol and polyoxypropylenetriol. Among these, from the viewpoint of the flexibility and the like of a cured product of the resin composition, preferable are polyoxypropylene glycol, polyoxypropylenetriol, polyoxypropylenetetraol and the like.

The number of hydroxyl groups in one molecule of the polyether polyol is 2 or more, and is usually equivalent to the number of active hydrogen atoms of the initiator; and from the viewpoint of improving the mechanical strength of a cured product of the resin composition, the number is preferably 3 or more, and then, preferably 8 or less and more preferably 6 or less.

The molecular weight calculated from hydroxyl value of the polyether polyol is 3,100 to 40,000, preferably 3,100 to 35,000, more preferably 3,100 to 30,000, still more preferably 3,500 to 28,000 and further still more preferably 3,800 to 25,000.

With the molecular weight calculated from hydroxyl value being 3,100 or more, the resin composition excellent in the stereolithography is easily obtained and then, a cured product having good flexibility is easily obtained. Then, when the molecular weight calculated from hydroxyl value is 40,000 or less, the first monomer is easily produced and the resin composition having a suitable viscosity is easily obtained.

The hydroxyl value of the polyether polyol is, from the viewpoint of the production easiness of the first monomer, the viscosity and the stereolithography of the resin composition, and the flexibility and the like of a cured product of the resin composition, preferably 2 to 50 mgKOH/g, more preferably 3 to 45 mgKOH/g and still more preferably 5 to 40 mgKOH/g.

The degree of unsaturation of the polyether polyol is, from the viewpoint of making it easy for a cured product higher in the strength and low in the tackiness to be obtained, preferably 0.1 meq/g or less, more preferably 0.05 meq/g or less and still more preferably 0.03 meq/g or less.

The monoepoxide is a compound having one epoxy ring, and examples thereof include alkylene oxides, glycidyl ethers and glycidyl esters. Specific examples thereof include ethylene oxide, propylene oxide, 1,2-butylene oxide, 2,3-butylene oxide, styrene oxide, methyl glycidyl ether, ethyl glycidyl ether, n-butyl glycidyl ether, 2-ethylhexyl glycidyl ether, lauryl glycidyl ether and glycidyl stearate. The monoepoxide may be used singly in one kind or may be used concurrently in two or more kinds. Among these, from the viewpoint of easy availability and the like, ethylene oxide and propylene oxide are preferable and concurrent use of ethylene oxide and propylene oxide is also preferable.

In the case where the monoepoxide contains ethylene oxide, the compatibility with the (meth)acrylic compound of the second monomer becomes good and the flexibility of a cured product of the resin composition easily becomes good. However, when the constitutional unit originated from ethylene oxide in the polyether polyol becomes much, the crystallization of the resin composition becomes easy and the good flexibility at low temperatures is hardly provided in some cases. Hence, in the case where the monoepoxide contains ethylene oxide, ethylene oxide is, in all monomers to be constitutional units of the polyether polyol, preferably 50% by mass or less, more preferably 40% by mass or less and still more preferably 30% by mass or less.

As the catalyst to be used for the ring-opening polymerization of the monoepoxide, a known one can be applied. Examples thereof include alkali catalysts such as potassium hydroxide, transition metal compound-porphyrin complexes such as complexes obtained by reacting an organoaluminum compound with porphyrin, double metal cyanide complexes and phosphazene compounds; among these, from the viewpoint of the macromolecularization, the uniformization of the molecular weight distribution and the like of the polyether polyol, double metal cyanide complex are preferable.

As the double metal cyanide complex, complexes having zinc hexacyanocobaltate as their main component are preferable and ether and/or alcohol complexes are particularly preferable. As the ethers, for example, ethylene glycol dimethyl ether (glyme), diethylene glycol dimethyl ether (diglyme) and the like are preferable and from the viewpoint of the handleability in production of the complexes, glyme is particularly preferable. As the alcohols, for example, tert-butanol, tert-butyl cellosolve and the like are preferable and from the viewpoint of the handleability in production of the complexes, tert-butanol is particularly preferable.

The production of the polyether polyol using a double metal cyanide complex catalyst can be carried out by a known method; and a production method can be adopted which uses a catalyst described in, for example, WO2003/062301, WO2004/067633, JP 2004-269776 A, JP 2005-15786 A, WO2013/065802, or JP 2015-010162 A.

### <Polyisocyanate>

The polyisocyanate is a compound having two or more isocyanate groups in one molecule; and examples include aromatic, aliphatic, aromatic ring-containing aliphatic polyisocyanate and modified products thereof. Specific examples thereof include tolylene diisocyanate, diphenylmethane diisocyanate, hexamethylene diisocyanate, isophorone diisocyanate, xylylene diisocyanate and polymethylene polyphenylene isocyanate, and prepolymer-modified, isocyanurate-modified, urea-modified, or carbodiimide-modified products thereof. The polyisocyanate may be used singly in one kind or may be used concurrently in two or more kinds.

The polyisocyanate is, from the viewpoint of the viscosity of the resin composition and the flexibility and the like of a cured product thereof, preferably one having two or three isocyanate groups in one molecule thereof and more preferably a diisocyanate; specifically, hexamethylene diisocyanate, isophorone diisocyanate and the like are preferable, and isophorone diisocyanate is more preferable.

### <Compound having a (meth)acryloyl group>

The compound having a (meth)acryloyl group has one group reactive with isocyanate group in one molecule thereof and has one or two (meth)acryloyl groups in one molecule thereof. The compound having a (meth)acryloyl group may be used singly in one kind or may be used concurrently in two or more kinds.

Examples of the group reactive with isocyanate group include a hydroxyl group and an amino group having a nitrogen atom having hydrogen atoms bonded thereto; and preferable is an alicyclic hydrocarbon group or a hydroxyl group bonded to an aliphatic hydrocarbon group.

Examples of the compound having a (meth)acryloyl group include hydroxyalkyl (meth)acrylates, hydroxycycloalkyl (meth)acrylates and hydroxyalkyl(meth)acrylamides; among these, preferable are hydroxyalkyl (meth)acrylates and hydroxyalkyl (meth)acrylamides whose alkyl group moiety has 1 to 10 carbon atoms. The number of carbon atoms of the alkyl group moiety is preferably 1 to 8 and more preferably 1 to 6. Specific examples thereof include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 5-hydroxyhexyl (meth)acrylate, 6-hydroxyhexyl (meth)acrylate, hydroxymethyl(meth)acrylamide and hydroxyethyl (meth)acrylamide; and among these, 2-hydroxyethyl (meth)acrylate and 2-hydroxypropyl (meth)acrylate are preferable, 2-hydroxyethyl acrylate and 2-hydroxypropyl acrylate are more preferable, and 2-hydroxyethyl acrylate is still more preferable.

Examples of the compound having two (meth)acryloyl groups include 2,2-(bisacryloyloxymethyl) propan-1-ol and 1,1-(bisacryloyloxymethyl) ethan-1-ol; and among these, 1,1-(bisacryloyloxymethyl) ethan-1-ol is preferable.

### <Method of synthesizing the first monomer>

In synthesis of the first monomer, the order of reacting three components of the polyether polyol, the polyisocyanate and the compound having a (meth)acryloyl group is not particularly limited, and the three components may be reacted simultaneously, or two components of the polyether polyol and the polyisocyanate, or two components of the polyisocyanate and the compound having a (meth)acryloyl group may first be reacted. Preferably, the polyether polyol and the polyisocyanate are reacted under the condition of stoichiometrically excessive amount of the isocyanate group to obtain a urethane prepolymer, and thereafter, the compound having a (meth)acryloyl group is reacted with the isocyanate group of the urethane prepolymer.

In this case, the polyisocyanate is blended in such an amount that the isocyanate group of the polyisocyanate is, with respect to 1 mol of the hydroxyl group of the polyether polyol, preferably 1.2 to 3.5 mol, more preferably 1.3 to 3.3 mol and still more preferably 1.5 to 3.0 mol.

With regard to the reaction of the urethane prepolymer with the compound having a (meth)acryloyl group, the compound having a (meth)acryloyl group is blended in such an amount that the hydroxyl group of the compound having a (meth)acryloyl group is, with respect to 1 mol of the isocyanate group of the urethane prepolymer, preferably 1 to 1.5 mol.

The reaction condition may be a usual urethanization reaction condition; and the reaction temperature is preferably in the range of 30 to 90°C and a urethanization catalyst can suitably be used. As the urethanization catalyst, a known one can be applied; and examples thereof include cobalt naphthenate, zinc naphthenate, lead 2-ethylhexanoate, dibutyltin dilaurate, tin 2-ethylhexanoate, triethylamine and 1,4-diazabicyclo [2.2.2] octane. In the case of using the urethanization catalyst, the amount thereof to be used is, with respect to the polyisocyanate, preferably 100 to 10,000 ppm by mass.

Then, in order to suppress the thermal polymerization reaction by the (meth)acryloyl groups of the compound having a (meth)acryloyl group, a polymerization inhibitor may suitably be added. As the polymerization inhibitor, a well-known one can be applied; and examples thereof include hydroquinone, hydroquinone monomethyl ether, o-nitrotoluene, 2,5-di-tert-butylhydroquinone and 4-methoxyphenol. In the case of adding the polymerization inhibitor, the amount thereof to be added is, with respect to the total mass of the three components of the polyether polyol, the polyisocyanate and the compound having a (meth)acryloyl group, preferably 10 to 5,000 ppm by mass.

The number-average molecular weight of the first monomer is, from the viewpoint of the viscosity of the resin composition and the flexibility of a cured product thereof, preferably 3,000 to 40,000, more preferably 4,000 to 35,000 and still more preferably 5,000 to 30,000. In the case where two or more kinds of the first monomer are concurrently used, it is preferable that each number-average molecular weight thereof is in the above range.

### [Second monomer]

The second monomer is a (meth)acrylic compound. The second monomer is good in compatibility with the first monomer and has a function as a diluent to reduce the viscosity of the resin composition. By containing the second monomer, the resin composition is low in viscosity suitable for use in 3D printers.

Examples of the second monomer include alkyl (meth)acrylates such as methyl (meth)acrylate, ethyl (meth)acrylate, propyl (meth)acrylate, isopropyl (meth)acrylate, 2-ethylhexyl (meth)acrylate and isooctyl (meth)acrylate; hydroxyalkyl (meth)acrylates such as 2-hydroxyethyl (meth)acrylate, 2-hydroxypropyl (meth)acrylate and 4-hydroxybutyl (meth)acrylate; (meth)acrylates having a ring structure such as isobornyl (meth)acrylate, benzyl (meth)acrylate, phenoxyethyl (meth)acrylate and tetrahydrofurfuryl (meth)acrylate; di(meth)acrylates such as 1,4-butanediol di(meth)acrylate and 1,6-hexanediol di(meth)acrylate; (meth)acrylates having an ether bond, such as ethoxydiethylene glycol (meth)acrylate, methoxytriethylene glycol (meth)acrylate, 2-ethylhexyl glycol (meth)acrylate, methoxypolyethylene glycol (meth)acrylate, phenoxydiethylene glycol (meth)acrylate, polyethylene glycol di(meth)acrylate. dipropylene glycol di(meth)acrylate, tripyrene glycol di(meth)acrylate, polypropylene glycol di(meth)acrylate and polytetramethylene glycol di(meth)acrylate; (meth)acrylamides such as (meth)acrylamide, isopropyl(meth)acrylamide, diethyl(meth)acrylamide, dimethyl(meth)acrylamide, dimethylaminopropyl(meth)acrylamide, dimethylaminopropyl(meth)acrylamide methyl chloride quaternary salt, hydroxymethyl(meth)acrylamide and hydroxyethyl(meth)acrylamide; and (meth)acryloylmorpholine. The second monomer may be used singly in one kind or may be used concurrently in two or more kinds.

Among these, the (meth)acrylic compound of the second monomer is, from the viewpoint of the compatibility with the first monomer and the reduction in the viscosity of the resin composition, preferably one having a (meth)acryloyl group and a hydrocarbon group having 1 to 10 carbon atoms. The hydrocarbon group may be acyclic or cyclic, and the number of carbon atoms thereof is more preferably 2 to 10 and still more preferably 3 to 10.

The second monomer is, with respect to 100 parts by mass in total of the first monomer and the second monomer in the resin composition, preferably 40 to 90 parts by mass, more preferably 45 to 85 parts by mass and still more preferably 50 to 80 parts by mass. That is, the first monomer is, with respect to 100 parts by mass in total of the first monomer and the second monomer in the resin composition, preferably 10 to 60 parts by mass, more preferably 15 to 55 parts by mass and still more preferably 20 to 50 parts by mass.

With the content proportions of the first monomer and the second monomer in the above ranges, the resin composition low in viscosity suitable for use in 3D printers is easily obtained and a cured product thereof excellent in flexibility even in a low temperature range is easily obtained.

### [Photopolymerization initiator]

The photopolymerization initiator is a polymerization initiator capable of initiating the polymerization of the first monomer and the second monomer by irradiation with active energy rays such as ultraviolet rays, and a photopolymerization initiator usable for well-known active energy ray-curable compositions can be applied.

Examples of the photopolymerization initiator include 1-hydroxycyclohexyl phenyl ketone, 2-hydroxy-2-methylpropiophenone, α-hydroxyacetophenone, 2,2-diethoxyacetophenone, 2,2-dimethoxy-2-phenylacetophenone, 1-(4-isopropylphenyl)-2-hydroxy-2-methylpropanone, 1-(4-dodecylphenyl)-2-hydroxy-2-methylpropanone, 4-(2-hydroxyethoxy)-phenyl (2-hydroxy-2-propyl) ketone, benzoin, benzoin methyl ether, benzoin ethyl ether, benzoin isopropyl ether, benzoin n-butyl ether, benzoin phenyl ether, benzophenone, 2-benzoylbenzoic acid, methyl 2-benzoylbenzoate, 4-phenylbenzophenone, 4-methoxybenzophenone, methyl benzoylformate, benzil, camphor quinone, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2-methyl-4'-(methylthio)-2-morpholinopropiophenone, 2,4,6-trimethylbenzoyldiphenylphosphine oxide and phenylbis(2,4,6-trimethylbenzoyl)phosphine oxide. The photopolymerization initiator may be used singly in one kind or may be used concurrently in two or more kinds.

The content of the photopolymerization initiator in the resin composition is, from the viewpoint of the suitable polymerization velocity, with respect to 100 parts by mass in total of the first monomer and the second monomer, preferably 0.001 to 20 parts by mass, more preferably 0.01 to 10 parts by mass and still more preferably 0.1 to 7 parts by mass.

### [Other components]

The resin composition, from the viewpoint of the easy handleability in 3D printers by the reduction in the viscosity, the further improvement in the flexibility of a cured product thereof, and the like, may contain, other than the first monomer, the second monomer and the photopolymerization initiator, other components.

From the viewpoint of fully exhibiting advantageous effects of the present invention, however, the total content of the first monomer and the second monomer in the resin composition is preferably 60% by mass or more, more preferably 75% by mass or more and still more preferably 90% by mass or more, and then, is less than 100% by mass.

Examples of the other components include other monomer components other than the first monomer and the second monomer, various kinds of resins such as epoxy resins, acrylic resins and urethane resins, plasticizers, colorants such as pigments and dyes, defoaming agents, leveling agents, flame retardants, antioxidants, ultraviolet absorbents, fillers such as silica, talc and calcium carbonate, photoacid generators and photobase generators. Then, solvents may be included. These other components in the resin composition can be blended in contents in the range of not impairing advantageous effects of the present invention.

### <Third monomer>

One of the other monomer components includes a third monomer, and it is also preferable that the resin composition further contains the third monomer.

The third monomer is a reaction product of a polyether polyol, a polyisocyanate, and a compound having a (meth)acryloyl group; the polyether polyol has a molecular weight calculated from hydroxyl value of less than 3,100; the compound having a (meth)acryloyl group has one group reactive with isocyanate group in one molecule thereof, and one or two (meth)acryloyl groups in one molecule thereof; the total number of moles of the hydroxyl group of the polyether polyol and the group reactive with isocyanate group of the compound having a (meth)acryloyl group is equal to the number of moles of the isocyanate group of the polyisocyanate. The polyether polyol being a constitutional raw material in the third monomer has a lower molecular weight calculated from hydroxyl value than the polyether polyol being a constitutional raw material in the first monomer; that is, the third monomer is a urethane (meth)acrylate obtained by using the low-molecular weight polyether polyol. The third monomer may be used singly in one kind or may be used concurrently in two or more kinds.

The third monomer can reduce the viscosity of the resin composition without impairing the stereolithography of the resin composition. The third monomer is different from the first monomer only in the molecular weight calculated from hydroxyl value of the polyether polyol being a constitutional raw material, and other than this, its composition is same as the first monomer, thus descriptions thereof will be omitted.

In the case where the resin composition contains the third monomer, the content thereof is, with respect to 100 parts by mass of the resin composition, preferably 0.5 to 30 parts by mass, more preferably 1 to 25 parts by mass and still more preferably 2 to 20 parts by mass.

### <Polyether polyol>

It is also preferable that the resin composition further contains a polyether polyol (hereinafter, for distinction from the polyether polyol in the first monomer, and the like, referred to as polyether polyol (X)) having a molecular weight calculated from hydroxyl value of 3,100 to 40,000 and containing 50% by mass or less of ethylene oxide in all monomers to be constitutional units of the polyether polyol.

The polyether polyol (X) may be the same as or different from the polyether polyol being a constitutional raw material of the first monomer, and can act as a plasticizer. That is, the polyether polyol (X) improves the flexibility of a cured product of the resin composition and can contribute also to the improvement in the handleability in 3D printers by the reduction in the viscosity of the resin composition.

Examples of the polyether polyol (X) include polyether polyols similar to the polyether polyol being a constitutional raw material of the first monomer, polytrimethylene glycol, polytetramethylene glycol and polytetramethylene glycol having an alkyl group having 1 to 5 carbon atoms (preferably a methyl group or an ethyl group) as a side chain of the oxytetramethylene group. The polyether polyol (X) may be used singly in one kind or may be used concurrently in two or more kinds.

In the case where the polyether polyol (X) contains a constitutional unit originated from ethylene oxide, from the viewpoint of making good the compatibility with the (meth)acrylic compound of the second monomer and providing the good action as a plasticizer, as in the polyether polyol being a constitutional raw material of the first monomer, ethylene oxide is, in all monomers to be constitutional units of the polyether polyol (X), preferably 50% by mass or less, more preferably 40% by mass or less and still more preferably 30% by mass or less.

In the case where the resin composition contains the polyether polyol (X), the content thereof is, with respect to 100 parts by mass of the resin composition, preferably 0.5 to 30 parts by mass, more preferably 1 to 25 parts by mass and still more preferably 2 to 20 parts by mass.

### [Method for producing the resin composition for 3D printer]

The resin composition for 3D printer of the present invention can be produced by mixing blending components containing the first monomer, the second monomer and the photopolymerization initiator. Here, as the first monomer, it is preferable to use the polyether polyol, in the first monomer, having a molecular weight calculated from hydroxyl value of 3,100 to 30,000, as described above, obtained by ring-opening polymerization of a monoepoxide by using a compound having an active hydrogen-containing group and having two or more active hydrogen atoms in one molecule thereof as an initiator in the presence of a double metal cyanide complex catalyst.

In the resin composition for 3D printer, it is preferable that the blending components, i.e., the first monomer, the second monomer, the photopolymerization initiator and other components optionally contained are homogeneously mixed, and these components can be mixed by a known mixing machine, for example, a rotary and revolutionary stirring defoaming device, a homogenizer, a planetary mixer, a three-roll mill or a bead mill. Each blending component may be mixed simultaneously or may be sequentially added and mixed.

### [Cured product]

The cured product of the present invention is obtained by irradiating the above-mentioned resin composition for 3D printer with light.

The resin composition of the present invention is for 3D printers, and has a viscosity low enough for use in 3D printers and is excellent in the stereolithography in 3D printers and can give the cured product (shaped product) excellent in the flexibility.

In the cured product of the present invention, the storage elastic modulus at 25°C is preferably 0.1 to 300 MPa, more preferably 0.2 to 250 MPa, still more preferably 0.3 to 200 MPa, further still more preferably 0.3 to 150 MPa and particularly preferably 0.3 to 100 MPa. Here, in the present invention, the storage elastic modulus is regarded as an index of the flexibility of the cured product.

The cured product of the present invention is excellent in the flexibility even in a low temperature range of 0°C or less, and is low in the temperature dependency of the storage elastic modulus; the ratio of the storage elastic modulus at -20°C to that at 40°C is preferably 30 or less, more preferably 25 or less, still more preferably 20 or less, further still more preferably less than 15, particularly preferably 12 or less, and more particularly preferably 10 or less.

In the cured product of the present invention, the glass transition temperature is, from the viewpoint of the excellent flexibility in a low temperature range, preferably -50°C or less, more preferably -55°C or less and still more preferably -57°C or less.

In the cured product of the present invention, the tensile elongation at break is, from the viewpoint of the excellent shape followability of the shaped product and the like, preferably 170% or more, more preferably 180% or more and still more preferably 190% or more. Then, the tensile break strength is preferably 2 MPa or more, more preferably 3 MPa or more and still more preferably 4 MPa or more.

Since the cured product of the present invention is obtained as an stereolithography product high in precision by 3D printers based on three-dimensional CAD data, and is low in the temperature dependency of the storage elastic modulus and excellent also in the flexibility in a low temperature range, the cured product is suitable as an stereolithographic product requiring the flexibility, and can suitably be applied to, for example, shoe soles, artificial organs and organ models, and is useful particularly for artificial organs or organ models.

### Examples

Hereinafter, the present invention will be described specifically by way of Examples, but the present invention is not any more limited to the following Examples.

### [Synthesis of polyether polyols]

Polyether polyols (a) to (e) used for synthesis of monomers were produced by the following Synthesis Examples. Methods of measuring physical properties of each polyether polyol were as follows.

### [Hydroxyl value]

The hydroxyl value of a polyether polyol was measured according to B method (automatic potentiometric titration) of JIS K1557-1:2007.

### [Degree of unsaturation]

The degree of unsaturation of a polyether polyol was measured according to JIS K1557-3:2007.

### [Molecular weight calculated from hydroxyl value]

The molecular weight calculated from hydroxyl value of a polyether polyol (the number of hydroxyl groups in one molecule: n) was determined by using a hydroxyl value (V [mgKOH/g]) measured in the above and from a calculation value of 56,100 × n/V. Then, the number of hydroxyl groups in one molecule of the polyether polyol was taken as the number of hydroxyl groups in one molecule of an initiator used for synthesis of the polyether polyol.

### [Synthesis Example 1-1]

In a reaction vessel equipped with a stirrer and a nitrogen introducing tube, 2 g of a zinc hexacyanocobaltate-glyme complex as a catalyst and 1,000 g of a polyoxypropylenetriol (molecular weight calculated from hydroxyl value: 1,000) as an initiator were charged; in a nitrogen atmosphere at 130°C, 7,800 g of propylene oxide (hereinafter, abbreviated to "PO") was added and allowed to react for 4 hours; thereafter, by using potassium hydroxide as a catalyst, ethylene oxide (hereinafter, abbreviated to "EO") was added and allowed to react for 1 hour.

After ensuring that the decrease in the internal pressure of the pressure-resistant reaction vessel had stopped, and inactivating the catalyst, the resultant was refined to thereby obtain a polyether polyol (a) (hydroxyl value: 17.0 mgKOH/g, molecular weight calculated from hydroxyl value: 9,900, EO/(PO+EO): 12% by mass).

### [Synthesis Example 1-2]

The same procedure as in Synthesis Example 1-1 was carried out, except for using a polyoxypropylene glycol (molecular weight calculated from hydroxyl value: 700) as an initiator, to obtain a polyether polyol (b) (hydroxyl value: 28.7 mgKOH/g, molecular weight calculated from hydroxyl value: 3,910, EO/(PO+EO): 24% by mass).

### [Synthesis Example 1-3]

The same procedure as in Synthesis Example 1-2 was carried out, except for using a zinc hexacyanocobaltate-tert-butanol complex as a catalyst and using no EO, to obtain a polyether polyol (c) (hydroxyl value: 11.0 mgKOH/g, molecular weight calculated from hydroxyl value: 10,200, EO/(PO+EO): 0% by mass).

### [Synthesis Example 1-4]

The same procedure as in Synthesis Example 1-1 was carried out, except for using potassium hydroxide as a catalyst and using no EO, to obtain a polyether polyol (d) (hydroxyl value: 55.8 mgKOH/g, molecular weight calculated from hydroxyl value: 3,020, EO/(PO+EO): 0% by mass).

### [Synthesis Example 1-5]

The same procedure as in Synthesis Example 1-2 was carried out, except for using potassium hydroxide as a catalyst and using no EO, to obtain a polyether polyol (e) (hydroxyl value: 56.0 mgKOH/g, molecular weight calculated from hydroxyl value: 2,000, EO/(PO+EO): 0% by mass).

### [Synthesis Example 1-6]

The same procedure as in Synthesis Example 1-3 was carried out, except for using a polyoxypropylene glycol (molecular weight calculated from hydroxyl value: 700) as an initiator, to obtain a polyether polyol (f) (hydroxyl value: 6.4 mgKOH/g, molecular weight calculated from hydroxyl value: 17,530, EO/(PO+EO): 0% by mass).

### [Synthesis Example 1-7]

The same procedure as in Synthesis Example 1-3 was carried out, except for using a polyoxypropylenetetraol (molecular weight calculated from hydroxyl value: 550) as an initiator, to obtain a polyether polyol (f) (hydroxyl value: 7.7 mgKOH/g, molecular weight calculated from hydroxyl value: 29,140, EO/(PO+EO): 0% by mass).

In Table 1, the properties of each polyether polyol obtained in the above Synthesis Examples are shown.

**[Table 1]**

| Synthesis Example | 1-1 | 1-2 | 1-3 | 1-4 | 1-5 | 1-6 | 1-7 |
|---|---|---|---|---|---|---|---|
| Polyether polyol | a | b | c | d | e | f | 9 |
| Hydroxyl value [mgKOH/g] | 17.0 | 28.7 | 11.0 | 55.8 | 56.0 | 6.4 | 7.7 |
| Number of hydroxyl groups in one molecule | 3 | 2 | 2 | 3 | 2 | 2 | 4 |
| EO/(PO+EO) [% by mass] | 12 | 24 | 0 | 0 | 0 | 0 | 0 |
| Degree of unsaturation [meq/g] | 0.029 | 0.017 | 0.007 | 0.040 | 0.040 | 0.008 | 0.006 |
| Molecular weight calculated from hydroxyl value | 9900 | 3910 | 10200 | 3020 | 2000 | 17530 | 29140 |

### [Synthesis of monomers]

By using each polyether polyol obtained in the above Synthesis Examples, monomers (A) to (E) were produced according to the following Synthesis Examples.

### [Synthesis Example 2-1]

In a reaction vessel equipped with a stirrer and a nitrogen introducing tube, 100 parts by mass of the polyether polyol (a) and 6.7 parts by mass (3 mol with respect to 1 mol of the polyether polyol (a)) of isophorone diisocyanate were charged and allowed to react in the presence of 0.01 part by mass of dibutyltin dilaurate at 80°C for 4 hours to thereby obtain a urethane prepolymer.

To the urethane prepolymer, 0.05 part by mass of dibutyltin dilaurate and 0.05 part by mass of hydroquinone monomethyl ether were added, and thereafter, 3.54 parts by mass (3 mol with respect to 1 mol of the polyether polyol (a)) of 2-hydroxyethyl acrylate was dropwise added at 40°C. Thereafter, the reaction was carried out at 60°C until no absorption peak of the isocyanate group at a wavenumber of 2,250 cm⁻¹ had been ensured in an infrared absorption spectrum, to thereby obtain a monomer (A).

### [Synthesis Examples 2-2 to 2-7]

The same procedure as in Synthesis Example 2-1 was carried out, except for altering the polyether polyol (a) to the polyether polyols (b) to (g) in Synthesis Example 2-1 and in compositions indicated in the following Table 2, to thereby obtain monomers (B) to (G).

**[Table 2]**

| Synthesis Example | | 2-1 | 2-2 | 2-3 | 2-4 | 2-5 | 2-6 | 2-7 |
|---|---|---|---|---|---|---|---|---|
| Monomer | | A | B | C | D | E | F | G |
| Polyether polyol [parts by mass] | a | 100 | - | - | - | - | - | - |
| | b | - | 100 | - | - | - | - | - |
| | c | - | - | 100 | - | - | - | - |
| | d | - | - | - | 100 | - | - | - |
| | e | - | - | - | - | 100 | - | - |
| | f | - | - | - | - | - | 100 | - |
| | 9 | - | - | - | - | - | - | 100 |
| Isophorone diisocyanate | [parts by mass] | 6.7 | 11.4 | 4.4 | 22.2 | 22.2 | 2.5 | 3.1 |
| 2-Hyroxyethyl acrylate | [parts by mass] | 3.5 | 5.9 | 2.3 | 11.6 | 11.6 | 1.3 | 1.6 |

### [Examples 1 to 6]

By using each monomer obtained in the above Synthesis Examples, resin compositions (1) to (8) were prepared in blending compositions indicated in the following Table 3. Here, Examples 1 to 3, and 7 and 8 are examples of the present invention and Examples 4 to 6 are comparative examples.

### [Evaluations]

For the resin compositions (1) to (8), the following various evaluations were carried out. The evaluation results are shown in Table 3.

Then, test pieces for evaluation of cured products of the resin compositions were each fabricated by casting a resin composition in a silicone mold of 5 mm in width, 15 mm in length and 2 mm in thickness, and irradiating the resin composition with ultraviolet rays to cure the resin composition in a nitrogen environment by a conveyer-type UV irradiator (manufactured by ORC Manufacturing Co., Ltd., mercury xenon lamp, illuminance: 100 mW/cm², integrated light quantity: 3 J/cm²).

### [Viscosity]

The viscosity of a resin composition was measured at 25°C by an E-type viscometer.

### [Stereolithography]

Dumbbell No. 3 test pieces (shaped products) described in JIS K7312:1996 were fabricated from the resin compositions by using a stereolithographic 3D printer ("Value3D MagiX ML-100", manufactured by Mutoh Industries Ltd.).

The state of the shaped products was visually observed and the stereolithography by the 3D printer was evaluated from the shaping precision based on 3D CAD data, according to the following criteria.

### <Evaluation criteria>

A: parts (almost entire shaped product) accounting for 95% or more in volume of the shaped product exhibited a good shaping precision.
B: parts accounting for 80% or more and less than 95% in volume of the shaped product exhibited a good shaping precision.
C: parts thereof where good shaping was attained were parts accounting for less than 80% in volume of the shaped product.

### [Storage elastic modulus (25°C), temperature dependency of the storage elastic modulus, and glass transition temperature]

For test pieces for evaluation of cured products of the resin compositions, the storage elastic modulus was measured by a dynamic mechanical analyzer ("DMA 242A Artemis", manufactured by Netzsch-Geratebau GmbH, tensile mode, temperature range: -80 to 130°C, temperature-rise rate: 3°C/min. measurement frequency: 1 Hz, strain: 1%). In Table 1, the storage elastic moduli at 25°C are shown.

The peak temperature of the loss modulus was taken as a glass transition temperature.

The temperature dependency of the storage elastic modulus is, in Table 1, represented as a value (E'₁/E'₂) of a storage elastic modulus (E'₁ [MPa]) at -20°C divided by a storage elastic modulus (E'₂ [MPa]) at 40°C. It is indicated that the nearer 1 the value of the (E'₁/E'₂), the lower the temperature dependency of the storage elastic modulus and the better the flexibility is even in a low temperature range.

### [Tensile break strength and tensile elongation at break]

For the dumbbell No. 3 test pieces fabricated by the stereolithography 3D printer, the tensile break strength and the tensile elongation at break were measured by a tensile tester ("RTG-1310", manufactured by A&D Co. Ltd., tensile rate: 300 mm/min, temperature: 23°C).

**[Table 3]**

| Examples | | 1 | 2 | 3 | 4 | 5 | 6 | 7 | 8 |
|---|---|---|---|---|---|---|---|---|---|
| Resin composition | | 1 | 2 | 3 | 4 | 5 | 6 | 7 | 8 |
| Monomer [parts by mass] | A | 50 | - | - | - | - | - | - | - |
| | B | - | 50 | - | - | - | - | - | - |
| | C | - | - | 50 | - | - | 100 | - | - |
| | D | - | - | - | 50 | - | - | - | - |
| | E | - | - | - | - | 50 | - | - | - |
| | F | - | - | - | - | - | - | 50 | - |
| | G | - | - | - | - | - | - | - | 50 |
| Second monomer [parts by mass] | Isobornyl acrylate | 50 | 50 | 50 | 50 | 50 | - | 50 | 50 |
| Photopolymerization initiator [parts by mass] | α-hydroxy acetophenone | 0.5 | 0.5 | 0.5 | 0.5 | 0.5 | 0.5 | 0.5 | 0.5 |
| | Phenylbis(2,4,6-trimethylbenzoyl)phosphine oxide | 0.5 | 0.5 | 0.5 | 0.5 | 0.5 | 0.5 | 0.5 | 0.5 |

| Evaluations | | | | | | | | | |
|---|---|---|---|---|---|---|---|---|---|
| Viscosity (25°C) [mPa·s] | | 1710 | 590 | 1680 | 770 | 420 | 58300 | 5340 | 21000 |
| pfotoformability | | A | A | A | A | A | C | A | A |
| Cured product | Storage elastic modulus (25°C) [MPa] | 64 | 65 | 68 | 68 | 112 | - | 116 | 90 |
| | Temperature dependency of storage elastic modulus | 14 | 20 | 9 | 53 | 31 | - | 5 | 7 |
| | Glass transition temperature [°C] | -57 | -62 | -60 | -45 | -43 | - | -70 | -70 |
| | Tensile break strength [MPa] | 5.8 | 5.1 | 8.4 | 9.6 | 9.0 | - | 8.8 | 9.8 |
| | Tensile elongation at break [%] | 244 | 191 | 531 | 127 | 162 | - | 599 | 536 |

As is clear from the results shown in Table 3, it was observed that the resin compositions (Examples 1 to 3, and 7 and 8) containing the first monomer, the second monomer and the photopolymerization initiator of the present invention had viscosities low enough for use in the 3D printer, and cured products thereof were low in the glass transition temperature, low in the temperature dependency of the storage elastic modulus and excellent in the flexibility even in a low temperature range.

By contrast, the resin composition (instance 6) containing no second monomer was high in the viscosity, inferior in the stereolithography, and did not give a good shaped product. Then, although the resin compositions (Examples 4 and 5) low in the molecular weight calculated from hydroxyl value of the polyether polyol of the monomer had a relatively low viscosity, cured products thereof were high in the glass transition temperature and not sufficient in the flexibility in a low temperature range, and inferior in the tensile elongation at break.

## Claims

1. A resin composition for 3D printer, comprising: a first monomer; a second monomer; and a photopolymerization initiator,
wherein the first monomer is a reaction product of a polyether polyol, a polyisocyanate, and a compound having a (meth)acryloyl group;
the polyether polyol has a molecular weight determined from hydroxyl value of 3,100 to 40,000;
the compound having a (meth)acryloyl group has one group reactive with isocyanate group in one molecule thereof, and one or two (meth)acryloyl groups in one molecule thereof;
the total number of moles of the hydroxyl group of the polyether polyol and the group reactive with isocyanate group of the compound having a (meth)acryloyl group is equal to the number of moles of the isocyanate group of the polyisocyanate; and
the second monomer is a (meth)acrylic compound.

2. The resin composition for 3D printer according to claim 1, wherein the polyether polyol has a degree of unsaturation of 0.1 meq/g or less.

3. The resin composition for 3D printer according to claim 1 or 2, wherein in all monomers to be constitutional units of the polyether polyol, ethylene oxide is 50% by mass or less.

4. The resin composition for 3D printer according to any one of claims 1 to 3, wherein the polyether polyol has 3 or more hydroxyl groups in one molecule thereof.

5. The resin composition for 3D printer according to any one of claims 1 to 4, wherein the second monomer has a (meth)acryloyl group and a hydrocarbon group having 1 to 10 carbon atoms.

6. The resin composition for 3D printer according to any one of claims 1 to 5, wherein the first monomer is 10 to 80 parts by mass with respect to 100 parts by mass in total of the first monomer and the second monomer.

7. A method for producing the resin composition for 3D printer according to any one of claims 1 to 6, comprising mixing blending components comprising the first monomer, the second monomer and the photopolymerization initiator,
wherein the polyether polyol in the first monomer is a polyether polyol having a molecular weight determined from hydroxyl value of 3,100 to 30,000, obtained by ring-opening polymerization of a monoepoxide by using a compound having an active hydrogen-containing group and having two or more active hydrogen atoms in one molecule thereof as an initiator in the presence of a double metal cyanide complex catalyst.

8. A cured product obtained by irradiating the resin composition for 3D printer according to any one of claims 1 to 6 with light.

9. The cured product according to claim 8, wherein the ratio of the storage elastic modulus thereof at -20°C to the storage elastic modulus thereof at 40°C is 30 or less.

10. The cured product according to claim 8 or 9, wherein the cured product has a glass transition temperature of -50°C or less.

11. The cured product according to any one of claims 8 to 10, wherein the cured product has an elongation at break of 170% or more.

12. The cured product according to any one of claims 8 to 11, wherein the cured product is an artificial organ or an organ model.
